(19) Europäisches Patentamt

European Patent Office

Office européen des brevets

(11) **EP 4 557 643 A1**

(12) **EUROPEAN PATENT APPLICATION**
published in accordance with Art. 153(4) EPC

(43) Date of publication:
**21.05.2025 Bulletin 2025/21**

(21) Application number: **23838533.0**

(22) Date of filing: **12.05.2023**

(51) International Patent Classification (IPC):
***H04J 14/02*** *(2006.01)*

(52) Cooperative Patent Classification (CPC):
**H04J 14/02**

(86) International application number:
**PCT/CN2023/093889**

(87) International publication number:
**WO 2024/012038 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.07.2022 CN 202210809267**

(71) Applicant: **ZTE Corporation
Shenzhen, Guangdong 518057 (CN)**

(72) Inventors:
• **WU, Qiong**
  **Shenzhen, Guangdong 518057 (CN)**
• **ZHAO, Zhiyong**
  **Shenzhen, Guangdong 518057 (CN)**

(74) Representative: **Deambrogi, Edgardo et al
Jacobacci & Partners S.p.A.
Corso Emilia 8
10152 Torino (IT)**

(54) **MULTI-WAVELENGTH LABEL SIGNAL PROCESSING METHOD, CONTROLLER AND STORAGE MEDIUM**

(57) The present application discloses a multi-wavelength label signal processing method, a processor, and a storage medium. The method comprises: acquiring a service spectrum width of an optical service (S110); determining a carrier frequency according to the service spectrum width and a preset carrier frequency range (S120); performing modulation processing on wavelength information of the optical service according to the carrier frequency to obtain a single-frequency label signal or a dual-frequency label signal (S130); and sending the single-frequency label signal or the dual-frequency label signal to a signal receiving end, so that the signal receiving end obtains optical power and the wavelength information according to the single-frequency label signal or the dual-frequency label signal (S140).

Fig. 1

EP 4 557 643 A1

## Description

### Cross-Reference to Related Application

The present disclosure is proposed on the basis of Chinese Patent Application no. 202210809267.X and filed on July 11, 2022, and claims priority to the Chinese Patent Application, the disclosure of which is hereby incorporated into the present disclosure for reference in its entirety.

### Technical Field

The present application relates to the technical field of optical communications, and in particular, to a multi-wavelength label signal processing method, a controller, and a storage medium.

### Background

In the related processing procedure of a high-speed wavelength service signal, a low-frequency signal is modulated in the high-speed wavelength service signal by using a wavelength label technology, and performance detection and corresponding feature extraction are implemented in a downstream optical path, thereby implementing, in a dense wavelength division multiplexing system, basic optical layer perception functions such as optical channel level feature identification and performance detection.

However, with the continuous capacity expansion of wavelength division multiplexing system and the continuous increase of the single-wave rate, the main service spectrum width corresponding to the wavelength label signal is the larger and larger, the transmission distance becomes longer and longer, and a non-linear stimulated Raman scattering effect is caused when a carrier frequency of a wavelength label signal is relatively low, the influence of dispersion fading caused when the carrier frequency of the wavelength label signal is relatively high, and long-distance transmission may cause degradation of the quality of the wavelength label signal, causing limitations of related applications, and thus, the carrier frequency selection problem of the multi-wavelength label signal in a large-capacity long-distance transmission scenario cannot be solved.

### Summary

The embodiments of the present application provide a multi-wavelength label signal processing method, a controller and a storage medium.

According to a first aspect, an embodiment of the present application provides a multi-wavelength label signal processing method, applied to a signal sending end of a dense wavelength division multiplexing system, the signal sending end being connected to a signal receiving end, and the method comprising: acquiring a service spectrum width of an optical service; determining a carrier frequency according to the service spectrum width and a preset carrier frequency range; performing modulation processing on wavelength information of the optical service according to the carrier frequency to obtain a single-frequency label signal or a dual-frequency label signal; and sending the single-frequency label signal or the dual-frequency label signal to a signal receiving end, so that the signal receiving end obtains optical power and the wavelength information according to the single-frequency label signal or the dual-frequency label signal.

According to a second aspect, an embodiment of the present application provides a multi-wavelength label signal processing method, applied to a signal receiving end of a dense wavelength division multiplexing system, the signal receiving end being connected to a signal sending end, and the method comprising: receiving a wavelength label signal within a preset carrier frequency range; demodulating the wavelength label signal according to the carrier frequency range to obtain a service spectrum width and wavelength information; determining the wavelength label signal as a single-frequency label signal or a dual-frequency label signal according to the service spectrum width; and obtaining optical power according to the single-frequency label signal or the dual-frequency label signal.

According to a third aspect, an embodiment of the present application provides a controller, comprising a memory, a processor and a computer program stored in the memory and capable of running on the processor, wherein when executing the computer program, the processor implements the multi-wavelength label signal processing method according to any one of the first aspect and the second aspect.

According to a fourth aspect, an embodiment of the present application provides a computer readable storage medium, storing computer executable instructions, wherein the computer executable instructions are used for executing the multi-wavelength label signal processing method according to any one of the first aspect and the second aspect.

**Brief Description of the Drawings**

Fig. 1 is a flowchart of a multi-wavelength label signal processing method applied to a signal sending end of a dense wavelength division multiplexing system according to an embodiment of the present application;
Fig. 2 is a flowchart of a method for determining a carrier frequency range according to a service spectrum width in a multi-wavelength label signal processing method according to another embodiment of the present application;
Fig. 3 is a flowchart of a method for obtaining a single-frequency label and a dual-frequency label signal in a multi-wavelength label signal processing method according to another embodiment of the present application;
Fig. 4 is a flowchart of a method for generating a spectrum width threshold in a multi-wavelength label signal processing method according to another embodiment of the present application;
Fig. 5 is a flowchart of a multi-wavelength label signal processing method applied to a signal receiving end of a dense wavelength division multiplexing system according to another embodiment of the present application;
Fig. 6 is a flowchart of a method for demodulating a label signal in a multi-wavelength label signal processing method according to another embodiment of the present application;
Fig. 7 is a flowchart of a method for calculating optical power in a multi-wavelength label signal processing method according to another embodiment of the present application;
Fig. 8 is a block diagram of a flow of processing a sending-end wavelength label signal of according to another embodiment of the present application;
Fig. 9 is a block diagram of a flow of processing a receiving-end wavelength label signal of according to another embodiment of the present application;
Fig. 10 is a structural diagram of a controller according to another embodiment of the present application.

**Detailed Description of the Embodiments**

To make the objectives, technical solutions, and advantages of the present application clearer, the present application is further described in details below in combination with the drawings and embodiments. It should be understood that the specific embodiments described herein are only used to explain the present application, and are not intended to limit the present application.

In some embodiments, although functional modules have been divided in the schematic diagrams of systems and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In an optical transport network (OTN), a wavelength label technology refers to a technology that modulates a low-frequency signal in a high-speed wavelength service signal and implements performance detection and corresponding feature extraction in a downstream optical path. The wavelength label technology may be used to implement basic optical layer perception functions such as optical channel level feature identification and performance detection in a dense wavelength division multiplexing (DWDM) system.

Long-distance transmission may cause degradation of signal quality of a wavelength label, which is mainly reflected in two aspects: 1. a non-linear stimulated Raman scattering (SRS) effect may cause low-frequency crosstalk between different wavelengths, and in order to reduce the influence of SRS crosstalk, a carrier frequency of a label signal needs to be improved as far as possible; and 2. the dispersion accumulation may cause power fading of the label signal, and in order to reduce the influence of the dispersion fading, the carrier frequency of the label signal needs to be reduced as much as possible. The requirements of SRS crosstalk and dispersion fading on the carrier frequency of the label signal are opposite, and thus the influences of both need to be considered in a compromise when selecting the carrier frequency. In addition, with the continuous capacity expansion of a wavelength division system and the continuous improvement of a single-wave rate, the main service spectrum width corresponding to the wavelength label signal becomes larger and larger. In particular, in a C+L band transmission system, a 128GBd Quadrature Phase Shift Keying (QPSK) signal not only has a large spectrum width but also has a long transmission distance, and is greatly affected by dispersion fading, so that it is difficult to find a suitable carrier frequency which considers the influences of the two at the same time.

In order to solve at least the described problem, the present application discloses a multi-wavelength label signal processing method, a controller and a storage medium. The multi-wavelength label signal processing method proposed in the present application comprises: acquiring a service spectrum width of an optical service; determining a carrier frequency according to the service spectrum width and a preset carrier frequency range; performing modulation processing on wavelength information of the optical service according to the carrier frequency to obtain a single-frequency label signal or a dual-frequency label signal; and sending the single-frequency label signal or the dual-frequency label signal to a signal receiving end, so that the signal receiving end obtains optical power and the wavelength information according to the single-frequency label signal or the dual-frequency label signal, wherein a corresponding label carrier frequency is determined according to a service spectrum width, thereby reducing a non-linear stimulated Raman scattering effect caused when a carrier frequency of a wavelength label signal is relatively low, and the influence of dispersion fading caused when the carrier frequency of the wavelength label signal is relatively high, slowing down the progress of degradation of the quality of the wavelength label signal during long-distance transmission, and solving the carrier frequency selection problem of the multi-wavelength label signal in a large-capacity long-distance transmission scenario.

The embodiments of the present disclosure will be further described below with reference to the accompanying drawings.

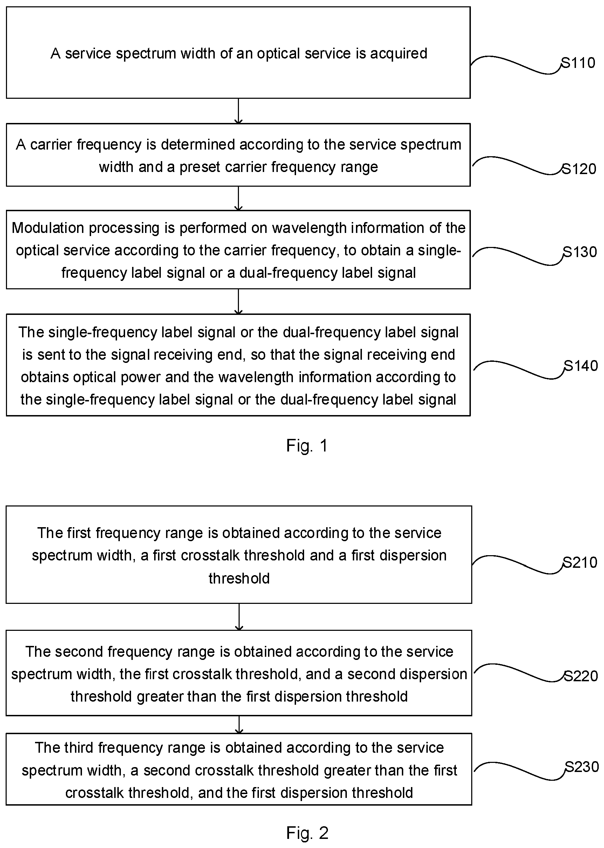

Referring to Fig. 1, Fig. 1 is a flowchart of a multi-wavelength label signal processing method according to an embodiment of the present application.

Step S110: a service spectrum width of an optical service is acquired.

In some embodiments, the service spectrum width refers to the frequency width between two upper half-maximum intensity points on the radiation spectral distribution curve, and is an effective 3dB spectrum width of an optical service; the service spectrum width of the optical service is a spectrum width of a service wavelength; in the transmission process of label signal, the spectrum width of the service wavelength affects the magnitude of the influence of the dispersion fading and the SRS crosstalk on the label signal; and therefore, in the embodiments of the present application, the service spectrum width of the optical service is acquired, the carrier frequency is determined according to the service spectrum width, and the label signal is generated according to the carrier frequency, thereby reducing the influence magnitude of dispersion fading and SRS crosstalk on the label signal.

Step S120: a carrier frequency is determined according to the service spectrum width and a preset carrier frequency range.

In some embodiments, for a normal dispersion optical fiber, as the wavelength increases, the dispersion coefficient also increases, correspondingly, dispersion fading of the wavelength label signal will be increased, and SRS crosstalk will be reduced, so that a longer wavelength can use a lower label carrier frequency than a shorter wavelength. It is necessary to appropriately select the appropriate label carrier frequency according to the size of the wavelength to achieve a relative balance between the dispersion fading and SRS crosstalk of various wavelength labels. However, in an actual transmission process, a service spectrum width will also affect a dispersion fading amplitude of a label signal, and thus a carrier frequency range needs to be determined according to the service spectrum width; when the carrier frequency of the label signal is ensured to be within the carrier frequency range, the influence magnitude of the dispersion fading and the SRS crosstalk can be reduced, so that the signal-to-noise ratio of the label signal does not deteriorate below the threshold of the receiver.

In some embodiments, in order to ensure that a certain accuracy requirement is met when a wavelength label is used for channel power detection and the signal-to-noise ratio will not deteriorate below the threshold of the receiver, the dispersion fading $\Delta P_{th1}$ and the SRS crosstalk $XT_{SRS}(\lambda)$ of the label signal during the transmission process must not exceed a set dispersion fading first threshold $\Delta P_{th1}$ and a set SRS crosstalk first threshold $XT_{th1}$, that is, for a given DWDM transmission scenario, an appropriate spectrum width threshold $\Delta\lambda_{th}$ is selected, and when the effective spectrum width $\Delta\lambda_{eff}$ of the service wavelength $\lambda$ configured in the system exceeds the threshold, there is no suitable single label carrier frequency $f_{PT}(\lambda)$, and two conditions $\Delta P(\lambda)\leq\Delta P_{th1}$ and $XT_{SRS}(\lambda)\leq XT_{th1}$ are satisfied.

Step S130: modulation processing is performed on wavelength information of the optical service according to the carrier frequency, to obtain a single-frequency label signal or a dual-frequency label signal.

In some embodiments, a carrier frequency is generated at a sending end of a wavelength label by using a service wavelength-label carrier frequency mapping manner; for a service wavelength with a small spectrum width, each wavelength is mapped to a fixed label carrier frequency, and the label signal is modulated in an on-off keying (OOK) format; for a service wavelength with a large spectrum width, each wavelength is mapped to two fixed label carrier frequencies: one high carrier frequency and a low carrier frequency, and the label signal is modulated in a binary frequency shift keying (2FSK) format; there is a carrier frequency range satisfying the two conditions: $\Delta P(\lambda)\leq\Delta P_{th1}$ and $XT_{SRS}(\lambda)\leq XT_{th1}$ for a service wavelength with a small spectrum width, and therefore a single-frequency label signal is generated according to the service wavelength with the small spectrum width; and furthermore, for a service wavelength with a large spectrum width, there is no carrier frequency range satisfying two conditions: $\Delta P(\lambda)\leq\Delta P_{th1}$ and $XT_{SRS}(\lambda)\leq XT_{th1}$, therefore, a dual-frequency label signal is generated according to the service wavelength with the large spectrum width.

In some embodiments, both the 2FSK format and the OOK format can be used for coherent demodulation, and have the same anti-noise performance and spectrum utilization rate, that is, after a signal sending end of a DWDM system modulates a label signal in the 2FSK format and the OOK format, and a signal receiving end receives the label signal, the label signal can be uniformly demodulated in the OOK format.

Step S140: the single-frequency label signal or the dual-frequency label signal is sent to the signal receiving end, so that the signal receiving end obtains optical power and the wavelength information according to the single-frequency label signal or the dual-frequency label signal.

In some embodiments, sending the single-frequency label signal or the dual-frequency label signal to the signal receiving end, so that the signal receiving end obtains optical power and wavelength information according to the single-frequency label signal or the dual-frequency label signal comprises: sending the single-frequency label signal or the dual-frequency label signal to the signal receiving end, so that the signal receiving end demodulates the single-frequency label signal or the dual-frequency label signal to obtain service spectrum width and wavelength information, and determines the channel optical power corresponding to the single-frequency label signal or the dual-frequency label signal according to the service spectrum width.

In some embodiments, the wavelength information is equivalent to dynamic power information of a service signal, and the optical power is equivalent to the average optical power of the service signal within a certain time interval. Therefore, with respect to the optical power, the wavelength information may be applied to a smaller order of magnitude in time, and the optical power may be applied to a larger time scale, for example, in a certain case, the wavelength information is applied to the order of microseconds, and the optical power is applied to the order of milliseconds; therefore, by obtaining the service spectrum width and the wavelength information by demodulating the single-frequency label signal or the dual-frequency label signal at the signal receiving end, and determining the channel optical power corresponding to the single-frequency label signal or the dual-frequency label signal according to the service spectrum width, the influence of non-linear stimulated Raman scattering effect and the dispersion fading on the wavelength label signal in a high-capacity long-distance transmission scenario can be reduced, and more accurate wavelength information and optical power can be acquired, thereby better implementing relevant applications of the wavelength information and the channel optical power.

In some embodiments, the multi-wavelength label signal processing method proposed in the present application is applied to a DWDM system; the wavelength label is generated at the sending end of the OTU, is amplified in the transmission path, and is detected at cross-connect nodes, until it is terminated at the receiving end of the OTU; at the sending end of the wavelength label, a carrier frequency is generated by means of service wavelength-label carrier frequency mapping; for a service wavelength with a small spectrum width, each wavelength is mapped to a fixed label carrier frequency, and the label signal is modulated in an OOK format; for a service wavelength with a large spectrum width, each wavelength is mapped to two fixed label carrier frequencies: one high carrier frequency and a low carrier frequency, and the label signal is modulated in 2FSK format.

In some embodiments, the carrier frequency of the selected wavelength label needs to overcome the influence of dispersion fading and SRS crosstalk at the same time, at the receiving end of the wavelength label, a fast Fourier transform (FFT) or a discrete Fourier transform (DFT) is used to complete separation of the multi-wavelength labels, and also demodulate the separated wavelength labels in an OOK format to acquire the wavelength information and service spectrum width corresponding to each wavelength label; for a wavelength service with a service spectrum width not exceeding a spectrum width threshold, the optical power of a wavelength channel is calculated by taking an amplitude at a carrier frequency point position of the OOK-modulated wavelength label; for a wavelength service with a spectrum width exceeding a threshold, due to the attenuation of a label signal by a high carrier frequency, there is a large error when the optical power of the wavelength channel is calculated by taking the amplitude at a high-carrier frequency point position of the 2FSK-modulated wavelength label; therefore, the optical power of the wavelength channel is calculated by taking the amplitude at the low-carrier frequency point position of the 2FSK-modulated wavelength label, which can effectively reduce the calculation error of the optical power.

Referring to Fig. 2, Fig. 2 is a flowchart of a multi-wavelength label signal processing method according to an embodiment of the present application. The method includes, but is not limited to, the following steps:

step S210: the first frequency range is obtained according to the service spectrum width, a first crosstalk threshold and a first dispersion threshold;

step S220: the second frequency range is obtained according to the service spectrum width, the first crosstalk threshold, and a second dispersion threshold greater than the first dispersion threshold; and

step S230: the third frequency range is obtained according to the service spectrum width, a second crosstalk threshold greater than the first crosstalk threshold, and the first dispersion threshold.

In some embodiments, the carrier frequency range comprises a first frequency range, a second frequency range and a third frequency range, the maximum frequency in the second frequency range is less than the minimum frequency in the third frequency range, wherein the first frequency range corresponds to the carrier frequency range of the single-frequency label signal of which the spectrum width of the service wavelength is less than or equal to the threshold; the second frequency range corresponds to a low-frequency carrier frequency range of the dual-frequency label signal of which the spectrum width of the service wavelength is greater than a threshold; and the third frequency range corresponds to the high-frequency carrier frequency range of the dual-frequency label signal of which the spectrum width of the service wavelength is greater than the threshold.

In some embodiments, determining a carrier frequency according to the service spectrum width and the carrier frequency range comprises: in cases where the service spectrum width is less than or equal to a spectrum width threshold, determining a first carrier frequency according to the first frequency range; or in cases where the service spectrum width is greater than a spectrum width threshold, determining a second carrier frequency according to the second frequency range, and determining a third carrier frequency according to the third frequency range.

In some embodiments, the first frequency range is obtained according to the service spectrum width, the first crosstalk threshold and the first dispersion threshold, the process is as follows: when a spectrum width $\Delta\lambda_{eff}$ of a service wavelength is less than a threshold $\Delta\lambda_{th}$, i.e. $\Delta\lambda_{eff}\leq\Delta\lambda_{th}$, an OOK format is selected to modulate a label signal, one selected label carrier frequency $f_{PT}(\lambda)$ can be used, and is marked as $f_{PT}(\lambda) = f(\lambda) \in A_f$; $A_f$ are all label carrier frequency sets satisfying requirements, and need to satisfy two conditions $\Delta P(\lambda)\leq\Delta P_{th1}$ and $XT_{SRS}(\lambda)\leq XT_{th1}$ at the same time, thereby ensuring that when a wavelength label is used for channel power detection, a certain accuracy requirement is satisfied and the signal-to-noise ratio will not deteriorate below the threshold of the receiver, wherein $\Delta P_{th1}$ and $XT_{th1}$ are respectively the set dispersion fading first threshold and the SRS crosstalk first threshold.

In some embodiments, the second frequency range is obtained according to the service spectrum width, the first crosstalk threshold, a second dispersion threshold greater than the first dispersion threshold, and the process is as follows: when a spectrum width $\Delta\lambda_{eff}$ of a service wavelength is higher than a threshold $\Delta\lambda_{th}$, i.e. $\Delta\lambda_{eff}>\Delta\lambda_{th}$, a 2FSK format is selected for modulating the label signal, the selected label carrier frequency $f_{PT}(\lambda)$ is divided into two, i.e. a high frequency carrier and a low frequency carrier; the high frequency carrier is denoted as $f_{PT}(\lambda)=[f_H(\lambda), f_L(\lambda)]$, wherein the high frequency $f_H(\lambda)\in A_{fH}$, the low frequency $f_L(\lambda)\in A_{fL}$, the third frequency range $A_{fH}$, and the second frequency range $A_{fL}$ are all high and low frequency band label carrier frequency sets satisfying requirements; the high frequency $f_H(\lambda)$ needs to satisfy two conditions $\Delta P(\lambda)\leq P_{th2}$ and $XT_{SRS}(\lambda) \leq XT_{th1}$, and the low frequency $f_L(\lambda)$ needs to satisfy two conditions $\Delta P(\lambda)\leq\Delta P_{th1}$ and $XT_{SRS}(\lambda) \leq XT_{th2}$, wherein $\Delta P_{th2}$ and $XT_{th2}$ are a set dispersion fading second threshold and a set SRS crosstalk second threshold, and satisfy that $\Delta P_{th2}>\Delta P_{th1}$ and $XT_{th2}>XT_{th1}$, it indicates that the requirements for dispersion fading and SRS crosstalk are relaxed, the high-frequency wavelength label signal can tolerate relatively large dispersion fading, only a high signal-to-noise ratio needs to be maintained to ensure reception and demodulation, the low-frequency wavelength label signal can tolerate relatively large SRS crosstalk, and only a small dispersion fading needs to be maintained to ensure the precision of channel power detection.

In some embodiments, the high-frequency points and the single-frequency label carrier frequency points in the dual-frequency label carrier frequency points are combined, i.e. the high-frequency points used in the 2FSK modulation and the carrier frequency points used in the OOK modulation overlap, which can reduce the calculation complexity of signal processing of the receiving end to the maximum extent.

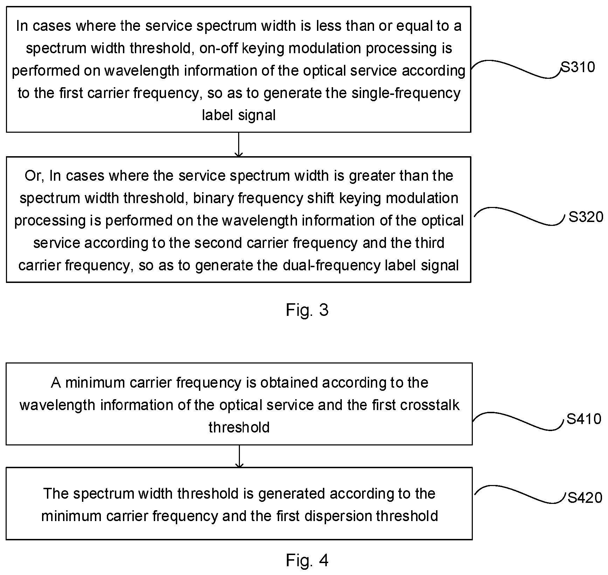

Referring to Fig. 3, Fig. 3 is a flowchart of a multi-wavelength label signal processing method according to an embodiment of the present application. The method includes, but is not limited to, the following steps:

step S310: in cases where the service spectrum width is less than or equal to a spectrum width threshold, on-off keying modulation processing is performed on wavelength information of the optical service according to the first carrier frequency, so as to generate the single-frequency label signal;

step S320: in cases where the service spectrum width is greater than the spectrum width threshold, binary frequency shift keying modulation processing is performed on the wavelength information of the optical service according to the second carrier frequency and the third carrier frequency, so as to generate the dual-frequency label signal.

In some embodiments, the service spectrum width of an optical service is less than or equal to a spectrum width threshold, which indicates that in a DWDM transport scenario corresponding to the optical service, there is a suitable single label carrier frequency which takes the influences of SRS crosstalk and dispersion fading into account simultaneously, thereby ensuring that a certain accuracy requirement is satisfied when a wavelength label is used for channel power detection, and the signal-to-noise ratio will not deteriorate below the receiver threshold, wherein the first frequency is the frequency range of the carrier frequency of the tag, therefore, when the first frequency is a carrier frequency, on-off keying modulation processing is performed on service wavelength information of a service wavelength signal of which the service spectrum width is less than or equal to a spectrum width threshold, to generate a single-frequency label signal, which can solve the problem of limitations in the application of a wavelength label technology in a coherent long-distance scene due to SRS crosstalk and dispersion fading, so that the signal receiving end acquires, according to the single-frequency label signal, wavelength information and optical power of an optical service of which the service spectrum width is less than or equal to the spectrum width threshold.

In some embodiments, he service spectrum width of an optical service is greater than a spectrum width threshold, which indicates that in a DWDM transmission scenario corresponding to the optical service, there is no suitable single label carrier frequency which takes the influences of SRS crosstalk and dispersion fading into account simultaneously, so as to ensure that when a wavelength label is used for channel power detection, a certain accuracy requirement is satisfied, and the signal-to-noise ratio will not deteriorate below the receiver threshold, wherein the first frequency is the frequency range of the label carrier frequency; therefore, when the second frequency is a low-frequency carrier frequency and the third frequency is a high-frequency carrier frequency, binary frequency shift keying modulation processing is performed on service wavelength information of a service wavelength signal of which the service spectrum width is greater than a spectrum width threshold, to generate a dual-frequency label signal, wherein thresholds corresponding to SRS crosstalk and dispersion fading are respectively improved by means of a high-and-low dual-label carrier frequency, the limitation of SRS crosstalk and dispersion fading is relaxed, so that the problem of application limitation caused by SRS crosstalk and dispersion fading in a coherent long-distance scene of a wavelength label technology can be solved, so that a signal receiving end can acquire, according to a high frequency label carrier frequency of a dual-frequency label signal, wavelength information of an optical service of which the service spectrum width is greater than a spectrum width threshold, and acquire, according to a low-frequency label carrier frequency of the dual-frequency label signal, the optical power of an optical service of which the service spectrum width is greater than a spectrum width threshold.

Referring to Fig. 4, Fig. 4 is a flowchart of a multi-wavelength label signal processing method according to an embodiment of the present application. The method includes, but is not limited to, the following steps:

step S410: a minimum carrier frequency is obtained according to the wavelength information of the optical service and the first crosstalk threshold; and

step S420: the spectrum width threshold is generated according to the minimum carrier frequency and the first dispersion threshold.

In some embodiments, the dispersion fading is calculated as follows:

$$\Delta P(\lambda) = 10\log10 \left| \frac{\sin[\pi f_{PT}(\lambda)\Delta\lambda_{eff}\sum_{i=1}^{N}D_i(\lambda)L_i]}{\pi f_{PT}(\lambda)\Delta\lambda_{eff}\sum_{i=1}^{N}D_i(\lambda)L_i} \right| \quad (1)$$

where $f_{PT}(\lambda)$ is a label carrier frequency corresponding to the wavelength with a central wavelength being equal to $\lambda$, $\Delta\lambda_{eff}$ is an effective 3dB spectrum width of a service wavelength, $D_i(\lambda)$ is a dispersion coefficient corresponding to the wavelength with the central wavelength being $\lambda$ at an ith optical fiber span, $L_i$ is the length of the ith optical fiber span, and N is the number of optical fiber spans accumulated for transmission. The Raman crosstalk is calculated as follows:

$$XT_{SRS}(\lambda) = 20\log10 \sqrt{[\sum_{i=1}^{N}\sum_{j=1}^{M_i}R_{ij}(\lambda)\sin\theta_{ij}(\lambda)]^2 + [\sum_{i=1}^{N}\sum_{j=1}^{M_i}R_{ij}(\lambda)\cos\theta_{ij}(\lambda)]^2} \quad (dB) \quad (2)$$

where $M_i$ is the total number of wavelengths of the ith span, $R_{ij}(\lambda)$ is a transfer scaling factor for transferring the wavelength $\lambda$ of the ith span to the jth wavelength, and $\theta_{ij}(\lambda)$ is a transfer phase factor for transferring the wavelength $\lambda$ of the ith span to the jth wavelength, which are respectively calculated as follows:

$$R_{ij}(\lambda) = \frac{\rho_{ij}(\lambda)g_{ij}(\lambda)P_i}{A_{eff,i}} \sqrt{\frac{1 + e^{-2\alpha_i L_i} - 2e^{-\alpha_i L_i}\cos[2\pi f_{PT}(\lambda)d_{ij}(\lambda)L_i]}{\alpha_i^2 + [2\pi f_{PT}(\lambda)d_{ij}(\lambda)]^2}}$$

$$\theta_{ij}(\lambda) = \tan^{-1}[\frac{2\pi f_{PT}(\lambda)d_{ij}(\lambda)}{\alpha_i}] + \tan^{-1}\{\frac{e^{-\alpha_i L_i}\sin[2\pi f_{PT}(\lambda)d_{ij}(\lambda)L_i]}{e^{-\alpha_i L_i}\cos[2\pi f_{PT}(\lambda)d_{ij}(\lambda)L_i] - 1}\} - 2\pi f_{PT}(\lambda)d_{ij}(\lambda)L_i$$

where $\alpha_i$ is a loss coefficient of an ith span fiber, $p_{ij}(\lambda)$ is a polarization overlapping factor of an ith span wavelength $\lambda$ and a jth wavelength, $g_{ij}(\lambda)$ is a Raman gain coefficient of the ith span wavelength $\lambda$ and the jth wavelength, $A_{eff,\,i}$ is an effective cross-sectional area of the ith span fiber, $P_i$ is a standard single-wave input optical power of the ith span, $d_{ij}(\lambda)$ is a group velocity mismatch parameter of the ith span wavelength $\lambda$ and the jth wavelength $\lambda_j$, and the calculation is as follows:

$$\mathrm{d_{ij}}(\lambda) = 0.5(\lambda - \lambda_j)[D_i(\lambda) + D_i(\lambda_j)]$$

where $D_i(\lambda)$ and $D_i(\lambda_j)$ are dispersion coefficients of wavelengths $\lambda$ and $\lambda_j$ in the ith span optical fiber respectively.

In some embodiments, by means of the Equation (2), the minimum carrier frequency is obtained according to the wavelength information of the optical service and the first crosstalk threshold, by means of the Equation (1), the spectrum width threshold is generated according to the minimum carrier frequency and the first dispersion threshold, for example, in a typical 100G transmission scenario: 32GBd QPSK wavelength service over 1500km of G.652 and G.655 mixed fiber optic transmission, the reference central wavelength is 1550 nm; the number of wavelength channels is calculated on the basis of a full configuration of 120 channels with a 50GHz grid; in G.652 optical fibers, the dispersion coefficient is calculated at 17ps/nm/km, while in G.655 optical fibers, the dispersion coefficient is calculated at 4ps/nm/km; an input fiber power is calculated at -1dBm; and calculating each span to be 75km, 1500km is equivalent to 20 spans. We set the dispersion fading and the SRS crosstalk thresholds as $\Delta P(\lambda) \leq \Delta P_{th1} = 1.5$dB and $XT_{SRS}(\lambda) \leq XT_{th1} = -16$dB respectively. Apparently, when transmitting in a G.655 optical fiber, the limitation of SRS crosstalk is larger, and a higher carrier frequency is required; by substituting the typical parameters into Equation (2), it can be calculated to obtain that the label carrier frequency needs to satisfy $f_{PT}(\lambda) \geq 26$MHz; when transmitting in a G.652 optical fiber, the limitation of dispersion fading is larger, and a lower carrier frequency needs to be used; by substituting the typical parameter and $f_{PT}(\lambda) = 26$Mhz into Equation (1), it can be calculated to obtain that $\Delta\lambda_{th} = 0.68$nm; that is, when the service spectrum width exceeds 0.68 nm (about 85 GHz), there is no suitable single label carrier frequency $f_{PT}(\lambda)$ which takes the influences of SRS crosstalk and dispersion fading into account simultaneously; when the service spectrum width is less than or equal to 0.68 nm (about 85 GHz), a single-frequency label signal is modulated; and when the service spectrum width is greater than 0.68 nm (about 85 GHz), a dual-band label signal is modulated.

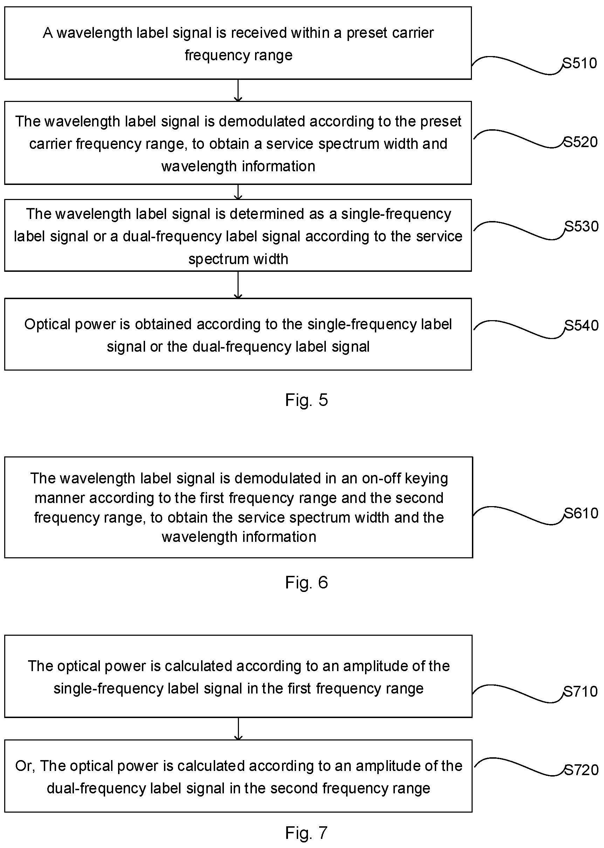

Referring to Fig. 5, Fig. 5 is a flowchart of a multi-wavelength label signal processing method according to an embodiment of the present application. The method includes, but is not limited to, the following steps:

step S510: a wavelength label signal is received within a preset carrier frequency range;
step S520: the wavelength label signal is demodulated according to the carrier frequency range, to obtain a service spectrum width and wavelength information;
step S530: the wavelength label signal is determined as a single-frequency label signal or a dual-frequency label signal according to the service spectrum width; and
step S540: optical power is obtained according to the single-frequency label signal or the dual-frequency label signal.

In some examples, a wavelength label signal within a preset carrier frequency range is received; a multi-wavelength label signal is received; fast Fourier transform or discrete Fourier transform processing is performed on the multi-wavelength label signal to obtain a wavelength label signal within a carrier frequency range; the carrier frequency range comprises a first frequency range, a second frequency range and a third frequency range; the maximum frequency in the second frequency range is less than the minimum frequency in the third frequency range; the multi-wavelength label signal can be detected at any position on a transmission path; and a multi-wavelength label detection unit of an optical fiber transmission link needs to detect multi-wavelength labels having different paths, different central wavelengths and different spectrum widths.

In some embodiments, the wavelength label signal comprises a single-frequency label signal that is modulated using an OOK format and is sent in the foregoing embodiments, and a dual-frequency label signal modulated using a 2FSK format; the carrier frequency range comprises a first frequency range, a second frequency range and a third frequency range, the maximum frequency in the second frequency range is less than the minimum frequency in the third frequency range, wherein the first frequency range corresponds to the carrier frequency range of the single-frequency label signal of which the spectrum width of the service wavelength is less than or equal to the threshold; the second frequency range corresponds to a low-frequency carrier frequency range of the dual-frequency label signal of which the spectrum width of the service wavelength is greater than a threshold; and the third frequency range corresponds to the high-frequency carrier frequency range of the dual-frequency label signal of which the spectrum width of the service wavelength is greater than the threshold.

In some embodiments, in order to ensure synchronous demodulation of multi-wavelength label signals, a DFT or an FFT method needs to be used first to extract label signals at different carrier frequencies, frequency points of the DFT or the FFT need to be aligned with frequency points generated by the sending end; and the frequency range needs to cover all the carrier frequencies used by the sending end.

Referring to Fig. 6, Fig. 6 is a flowchart of a multi-wavelength label signal processing method according to an embodiment of the present application. The method includes, but is not limited to, the following steps:
step S610: the wavelength label signal is demodulated in an on-off keying manner according to the first frequency range and the second frequency range, to obtain the service spectrum width and the wavelength information.

In some examples, fast Fourier transform or discrete Fourier transform processing is performed on the multi-wavelength label signal; after a wavelength label signal within a carrier frequency range is obtained, a label carrier frequency range demodulated in an OOK format needs to cover all carrier frequencies used in OOK modulation at the sending end and the high band carrier frequencies used in 2FSK modulation, that is, the label signal in the first frequency range is demodulated in the OOK format to obtain the wavelength information and the service spectrum width of the optical service of which the service spectrum width is less than or equal to the spectrum width threshold, the label signal within the second frequency range is demodulated in an OOK format to obtain wavelength information of an optical service of which the service spectrum width is greater than a spectrum width threshold, and the service spectrum width, thereby solving the problem of application limitation caused by SRS crosstalk and dispersion fading in a coherent long-distance scene of a wavelength label technology.

Referring to Fig. 7, Fig. 7 is a flowchart of a multi-wavelength label signal processing method according to an embodiment of the present application. The method includes, but is not limited to, the following steps:

  step S710: the optical power is calculated according to an amplitude of the single-frequency label signal in the first frequency range; and
  step S720: the optical power is calculated according to an amplitude of the dual-frequency label signal in the second frequency range.

In some examples, the optical power is calculated according to the amplitude of the single-frequency label signal in the first frequency range, and the optical power is calculated according to the amplitude of the dual-frequency label signal in the second frequency range, wherein an effective wavelength and wavelength spectrum width information can be identified according to wavelength label demodulation information; the wavelength label signal is determined as a single-frequency label signal or a dual-frequency label signal according to the service spectrum width; in cases where the service spectrum width is less than or equal to a spectrum width threshold, the wavelength label signal is determined as a single-frequency label signal; or in cases where the service spectrum width is greater than the spectrum width threshold, the wavelength label signal is determined as a dual-frequency label signal, and then a carrier frequency is selected according to the spectrum width to calculate optical power; when the spectrum width of the service wavelength is less than the threshold, the optical power is calculated using the carrier frequency amplitude in the first frequency range where the single-frequency label signal is mapped, i.e. when $\Delta\lambda_{eff} \leq \Delta\lambda_{th}$, the optical power is calculated using the carrier frequency amplitude in the set $A_f$ where $f(\lambda)$ is mapped; when the spectrum width of the service wavelength is greater than the threshold, the optical power is calculated using the carrier frequency amplitude in the second frequency range where the dual-frequency label signal is mapped, i.e. when $\Delta\lambda_{eff} > \Delta\lambda_{th}$, the optical power is calculated using the carrier frequency amplitude in the set $A_{fL}$ where $f_L(\lambda)$ is mapped.

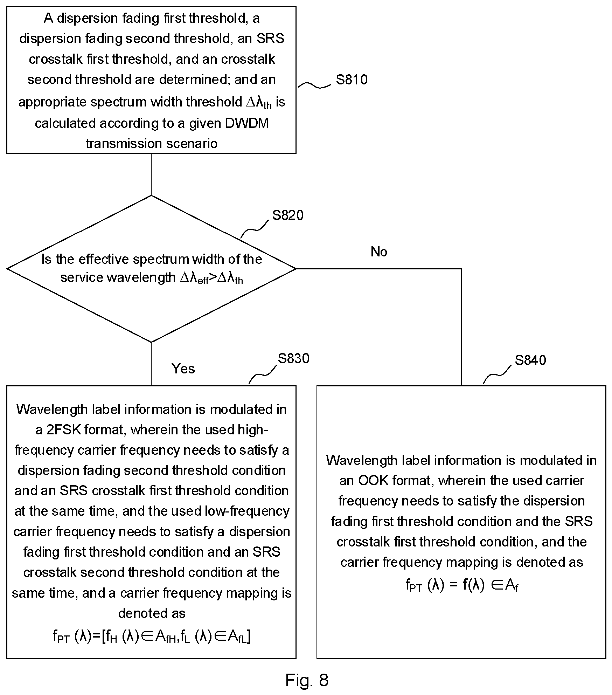

Referring to Fig. 8, Fig. 8 is an exemplary flowchart of a multi-wavelength label signal processing method according to an embodiment of the present application, which includes, but is not limited to, the following steps:

  step S810: a dispersion fading first threshold, a dispersion fading second threshold, an SRS crosstalk first threshold, and an crosstalk second threshold are determined; and an appropriate spectrum width threshold $\Delta\lambda_{th}$ is calculated according to a given DWDM transmission scenario;
  step S820: whether the effective spectrum width of the service wavelength $\Delta\lambda_{eff} > \Delta\lambda_{th}$ is determined;
  step S830: wavelength label information is modulated in a 2FSK format, wherein the used high-frequency carrier frequency needs to satisfy a dispersion fading second threshold condition and an SRS crosstalk first threshold condition at the same time, and the used low-frequency carrier frequency needs to satisfy a dispersion fading first threshold condition and an SRS crosstalk second threshold condition at the same time, and a carrier frequency mapping is denoted as $f_{PT}(\lambda) = [f_H(\lambda) \in A_{fH}, fL(\lambda) \in A_{fL}]$; and
  step S840: wavelength label information is modulated in an OOK format, wherein the used carrier frequency needs to satisfy the dispersion fading first threshold condition and the SRS crosstalk first threshold condition, and the carrier frequency mapping is denoted as $f_{PT}(\lambda) = f(\lambda) \in A_f$.

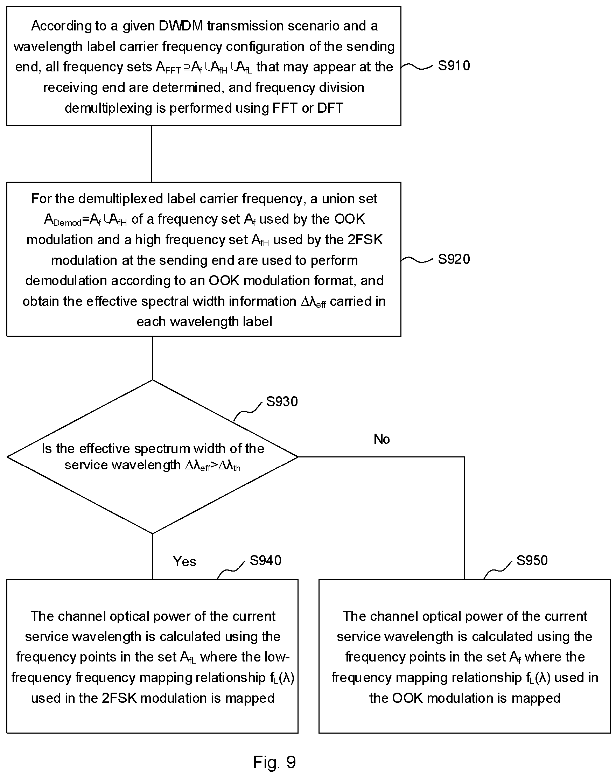

Referring to Fig. 9, Fig. 9 is an exemplary flowchart of a multi-wavelength label signal processing method according to an embodiment of the present application, which includes, but is not limited to, the following steps:

  step S910: according to a given DWDM transmission scenario and a wavelength label carrier frequency configuration of the sending end, all frequency sets $A_{FFT} \supseteq A_f \cup A_{fH} \cup A_{fL}$ that may appear at the receiving end are determined, and frequency division demultiplexing is performed using FFT or DFT;
  step S920: for the demultiplexed label carrier frequency, a union set $A_{Demod} = A_f \cup A_{fH}$ of a frequency set $A_f$ used by the OOK modulation and a high frequency set $A_{fH}$ used by the 2FSK modulation at the sending end are used to perform demodulation according to an OOK modulation format, and obtain the effective spectral width information $\Delta\lambda_{eff}$ carried

in each wavelength label;

step S930: whether the effective spectrum width of the service wavelength $\Delta\lambda_{eff} > \Delta\lambda_{th}$ is determined;

step S940: the channel optical power of the current service wavelength is calculated using the frequency points in the set $A_{f_L}$ where the low-frequency frequency mapping relationship $f_L(\lambda)$ used in the 2FSK modulation is mapped; and

step S950: the channel optical power of the current service wavelength is calculated using the frequency points in the set $A_f$ where the frequency mapping relationship $f_L(\lambda)$ used in the OOK modulation is mapped.

In an exemplary embodiment, the method is applied to a typical 100G transmission scenario: 32GBd QPSK wavelength service over 1500km of G.652 and G.655 mixed fiber optic transmission, the reference central wavelength is 1550 nm; the number of wavelength channels is calculated on the basis of a full configuration of 120 channels with a 50GHz grid; in G.652 optical fibers, the dispersion coefficient is calculated at 17ps/nm/km, while in G.655 optical fibers, the dispersion coefficient is calculated at 4ps/nm/km; an input fiber power is calculated at 1dBm; and calculating each span to be 75km, 1500km is equivalent to 20 spans. We set the dispersion fading and the SRS crosstalk thresholds as $\Delta P(\lambda)\leq \Delta P_{th1}=1.5dB$ and $XT_{SRS}(\lambda)\leq XT_{th1}=-16dB$ respectively. Apparently, when transmitting in a G.655 optical fiber, the limitation of SRS crosstalk is larger, and a higher carrier frequency is required; by substituting typical parameters into Equation (2), it can be calculated to obtain that the label carrier frequency needs to satisfy $f_{PT}(\lambda) \geq 26MHz$; when transmitting in a G.652 optical fiber, the limitation of dispersion fading is larger, and a lower carrier frequency needs to be used; by substituting a typical parameter and $f_{PT}(\lambda) = 26Mhz$ into Equation (1), it can be calculated to obtain that $\Delta\lambda_{th} = 0.68nm$; that is, when the service spectrum width exceeds 0.68 nm (about 85 GHz), there is no suitable single label carrier frequency $f_{PT}(\lambda)$ which takes the influences of SRS crosstalk and dispersion fading into account simultaneously: satisfying two conditions $\Delta P(\lambda)\leq\Delta P_{th1}$ and $XT_{SRS}(\lambda)\leq XT_{th1}$, and by substituting the typical parameters and $\Delta\lambda_{th} = 0.256$ nm (about 32 GHz) into Equation (1), it can be calculated to obtain that the label carrier frequency needs to satisfy $f_{PT}(\lambda)\leq68$ MHz.

In a transmission scenario of the present embodiment, a service wavelength spectrum width $\Delta\lambda_{th} = 0.256$ nm (about 32 GHz) is lower than a threshold; the sending end may select an OOK modulation format; and the selected carrier frequency $f_{PT}(\lambda)$ needs to satisfy two conditions $\Delta P(\lambda)\leq\Delta P_{th1}$ and $XT_{SRS}(\lambda)\leq XT_{th1}$ at the same time. For the SRS crosstalk requirement $f_{PT}(\lambda) \geq 26MHz$, and the dispersion fading requirement $f_{PT}(\lambda)\leq 68MHz$, i.e. for all label carrier frequency sets $A_f = [26, 68]MHz$ satisfying the requirements, a carrier frequency set $A_{FFT} = [26, 68]MHz$ requiring frequency division demultiplexing of a multi-wavelength label at the receiving end, and a frequency set $A_{Dmod} = [26, 68]MHz$ requiring demodulation in an OOK format, the channel optical power corresponding to the wavelength label is calculated using the carrier frequency amplitude in the set $A_f = [26, 68]MHz$ where $f_{PT}(\lambda)=f(\lambda)$ is mapped.

In an exemplary embodiment, the method is applied to a typical 200G transmission scenario: 64GBd QPSK wavelength service over 1500km of G.652 and G.655 mixed fiber optic transmission, the reference central wavelength is 1550 nm; the number of wavelength channels is calculated on the basis of a full configuration of 80 channels with a 75GHz grid; in G.652 optical fibers, the dispersion coefficient is calculated at 17ps/nm/km, while in G.655 optical fibers, the dispersion coefficient is calculated at 4ps/nm/km; an input fiber power is calculated at 1dBm; and calculating each span to be 75km, 1500km is equivalent to 20 spans. We set the dispersion fading and the SRS crosstalk thresholds as $\Delta P(\lambda)\leq \Delta P_{th1}=1.5dB$ and $XT_{SRS}(\lambda)\leq XT_{th1}=-16dB$ respectively. Apparently, when transmitting in a G.655 optical fiber, the limitation of SRS crosstalk is larger, and a higher carrier frequency is required; by substituting typical parameters into Equation (2), it can be calculated to obtain that the label carrier frequency needs to satisfy $f_{PT}(\lambda) \geq 26MHz$; when transmitting in a G.652 optical fiber, the limitation of dispersion fading is larger, and a lower carrier frequency needs to be used; a typical parameter and $f_{PT}(\lambda) = 26Mhz$ are substituted into Equation (1) to obtain $\Delta\lambda_{th} = 0.68nm$; that is, when the service spectrum width exceeds 0.68 nm (about 85 GHz), there is no suitable single label carrier frequency $f_{PT}(\lambda)$ which takes the influences of SRS crosstalk and dispersion fading into account simultaneously: satisfying two conditions $\Delta P(\lambda)\leq\Delta P_{th1}$ and $XT_{SRS}(\lambda)\leq XT_{th1}$, and by substituting the typical parameters and $\Delta\lambda_{th} = 0.512$ nm (about 64 GHz) into Equation (1), it can be calculated to obtain that the label carrier frequency needs to satisfy $f_{PT}(\lambda)\leq34$ MHz.

In a transmission scenario of the present embodiment, a service wavelength spectrum width $\Delta\lambda_{th} = 0.512$ nm (about 64 GHz) is lower than a threshold; the sending end may select an OOK modulation format; and the selected carrier frequency $f_{PT}(\lambda)$ needs to satisfy two conditions $\Delta P(\lambda)\leq \Delta P_{th1}$ and $XT_{SRS}(\lambda)\leq XT_{th1}$ at the same time. For the SRS crosstalk requirement $f_{PT}(\lambda) \geq 26MHz$, and the dispersion fading requirement $f_{PT}(\lambda)\leq 34MHz$, i.e., for all label carrier frequency sets $A_f = [26, 34]MHz$ satisfying the requirements, a carrier frequency set $A_{FFT} = [26, 34]MHz$ requiring frequency division demultiplexing of a multi-wavelength label at the receiving end, and a frequency set $A_{Dmod}= [26, 34]MHz$ requiring demodulation in an OOK format, the channel optical power corresponding to the wavelength label is calculated using the carrier frequency amplitude in the set $A_f = [26, 34]MHz$ where $f_{PT}(\lambda)=f(\lambda)$ is mapped.

In an exemplary embodiment, the method is applied to a typical 100G and 200G hybrid transmission scenario: 32GBd QPSK and 64GBd QPSK wavelength services over 1500km of G.652 and G.655 mixed fiber optic transmission; the reference center wavelength is 1550nm; the 32GBd QPSK is configured with a 50GHz grid, and the 64GBd QPSK is configured with a 75GHz grid; in G.652 optical fibers, the dispersion coefficient is calculated at 17ps/nm/km, while in G.655 optical fibers, the dispersion coefficient is calculated at 4ps/nm/km; the 32GBd QPSK is configured with an input fiber power of -1dBm, and the 64GBd QPSK is configured with an input fiber power of 1dBm; and calculating each span to be 75km, 1500km is equivalent to 20 spans. We set the dispersion fading and the SRS crosstalk thresholds as $\Delta P(\lambda) \leq \Delta P_{th1} = 1.5$dB and $XT_{SRS}(\lambda) \leq XT_{th1} = -16$dB respectively. Apparently, when transmitting in a G.655 optical fiber, the limitation of SRS crosstalk is larger, and a higher carrier frequency is required; by substituting typical parameters into Equation (2), it can be calculated to obtain that the carrier frequency of the label needs to satisfy $f_{PT}(\lambda) \geq 26$MHz; the requirements of different wave channel grid configurations for SRS crosstalk are almost unchanged; when transmitting in a G.652 optical fiber, the limitation of dispersion fading is larger, and a lower carrier frequency needs to be used; by substituting a typical parameter and $f_{PT}(\lambda) = 26$Mhz into Equation (1), it can be calculated to obtain that $\Delta\lambda_{th} = 0.68$nm; that is, when the service spectrum width exceeds 0.68 nm (about 85 GHz), there is no suitable single label carrier frequency $f_{PT}(\lambda)$ which takes the influences of SRS crosstalk and dispersion fading into account simultaneously: satisfying two conditions $\Delta P(\lambda) \leq \Delta P_{th1}$ and $XT_{SRS}(\lambda) \leq XT_{th1}$, and by substituting the typical parameters $\Delta\lambda_{eff} = 0.256$ nm and 0.512 nm (about 32 Ghz and 64 GHz) into Equation (1), it can be calculated to obtain that the label carrier frequency of the 32GBd QPSK service wavelength needs to satisfy $f_{PT}(\lambda) \leq 68$ MHz, and the label carrier frequency of the 64GBd QPSK service wavelength needs to satisfy $f_{PT}(\lambda) \leq 34$MHz.

In a transmission scenario of the present embodiment, a service wavelength spectrum width $\Delta\lambda_{th} = 0.256$nm and 0.512 nm (about 32Ghz and 64GHz) is lower than a threshold; the sending end may select an OOK modulation format; and the selected carrier frequency $f_{PT}PT(\lambda)$ needs to satisfy two conditions $\Delta P(\lambda) \leq \Delta P_{th1}$ and $XT_{SRS}(\lambda) \leq XT_{th1}$ at the same time. The SRS crosstalk requires that the wavelength label carrier frequency $f_{PT}(\lambda) \geq 26$MHz, and dispersion fading requires that the 32GBd QPSK service wavelength label carrier frequency $f_{PT}(\lambda) \leq 68$Mhz, and the 32GBd QPSK service wavelength label carrier frequency $f_{PT}(\lambda) \leq 34$Mhz, i.e. for the 32GBd QPSK service wavelength, for all label carrier frequency sets $A_f = [26, 68]$MHz satisfying the requirements, a carrier frequency set $A_{FFT} = [26, 68]$MHz requiring frequency division demultiplexing of a multi-wavelength label at the receiving end, and a frequency set $A_{Dmod} = [26, 68]$ MHz requiring demodulation in an OOK format, the channel optical power corresponding to the wavelength label is calculated using the carrier frequency amplitude in the set $A_f = [26, 34]$MHz where $f_{PT}(\lambda) = f(\lambda)$ is mapped; for the 64GBd QPSK service wavelength, for all label carrier frequency sets $A_f = [26, 34]$MHz satisfying the requirements, a carrier frequency set $A_{FFT} = [26, 34]$MHz requiring frequency division demultiplexing of a multi-wavelength label at the receiving end, and a frequency set $A_{Dmod} = [26, 34]$MHz requiring demodulationt, the channel optical power corresponding to the wavelength label is calculated using the carrier frequency amplitude in the set Ar=[26, 34]MHz where $f_{PT}(\lambda) = f(\lambda)$ is mapped.

In the transmission scenario of the present embodiment, the receiving end corresponds to two processing methods: one is that the calculation resources are sufficient when the receiving end performs signal processing, and many label carrier frequency points can be processed at the same time; for a 32GBd QPSK service, a mapping from a wavelength to a carrier frequency is used, the carrier frequency range being between [26, 68]MHz; and for a 64GBd QPSK service, another mapping from a wavelength to a carrier frequency is used, the carrier frequency range being between [26, 34]MHz; in said another mapping, the calculation resources are limited when the receiving end performs signal processing, and in order to reduce calculation complexity as far as possible, the number of label carrier frequencies at the receiving end needs to be reduced as far as possible, and 32GBd QPSK and 64GBd QPSK services use the same mapping from a wavelength to a carrier frequency, the carrier frequency range being between [26, 34]MHz.

In an exemplary embodiment, the method is applied to a typical C+L band 400G transmission scenario: 128GBd QPSK wavelength service over 1500km G.654 optical fiber transmission in the C+L band transmission scenario, the C-band and L-band label carrier frequencies are respectively processed as follows: for the C-band, the reference center wavelength is 1550 nm, the number of wavelength channels is calculated on the basis of a full configuration of 40 channels with a 150GHz grid; in G.654 optical fibers, the dispersion coefficient is calculated at 20ps/nm/km; an input fiber power is calculated at 6.5dBm; and calculating each span to be 75km, 1500km is equivalent to 20 spans. We set the dispersion fading and the SRS crosstalk thresholds as $\Delta P(\lambda) \leq \Delta P_{th1} = 1.5$dB and $XT_{SRS}(\lambda) \leq XT_{th1} = -16$dB respectively. By substituting typical parameters into Equation (2), it can be calculated to obtain that the SRS crosstalk requires a label carrier frequency $f_{PT}(\lambda) \geq 9$MHz; by substituting typical parameters and $f_{PT}(\lambda) = 9$MHz into Equation (1), it can be calculated to obtain that $\Delta\lambda_{th} = 1.64$nm, i.e., when the service spectrum width exceeds 1.64 nm (about 205 GHz), there is no suitable single label carrier frequency $f_{PT}(\lambda)$ which takes the influences of SRS crosstalk and dispersion fading into account simultaneously: satisfying two conditions $\Delta P(\lambda) \leq \Delta P_{th1}$ and $XT_{SRS}(\lambda) \leq XT_{th1}$, and by substituting the typical parameters and $\Delta\lambda_{eff} = 1.024$nm (about 128 GHz) into Equation (1), it can be calculated to obtain that the label carrier frequency needs to satisfy $f_{PT}(\lambda) \leq 15$ MHz.

In a transmission scenario of the present embodiment, a service wavelength spectrum width $\Delta\lambda_{eff} = 1.024$nm (about 128 GHz) is lower than a threshold $\Delta\lambda_{TH} = 1.64$nm; the sending end may select an OOK modulation format; and the selected carrier frequency $f_{PT}(\lambda)$ needs to satisfy two conditions $\Delta P(\lambda) \leq \Delta P_{th1}$ and $XT_{SRS}(\lambda) \leq XT_{th1}$ at the same time. For the SRS crosstalk requirement $f_{PT}(\lambda) \geq 9$MHz, and the dispersion fading requirement $f_{PT}(\lambda) \leq 15$MHz, i.e. for all label carrier frequency sets $A_f = [9, 15]$MHz satisfying the requirements, a carrier frequency set $A_{FFT} = [9, 15]$MHz requiring frequency division demultiplexing of a multi-wavelength label at the receiving end, and a frequency set $A_{Dmod} = [9, 15]$MHz requiring demodulation in an OOK format, the channel optical power corresponding to the wavelength label is calculated using the carrier frequency amplitude in the set $A_f$ = [9, 15]MHz where $f_{PT}(\lambda)$=f($\lambda$) is mapped.

For the L band, the reference center wavelength is 1600 nm, the number of wavelength channels is calculated on the basis of a full configuration of 40 channels with a 150GHz grid; in G.654 optical fibers, the dispersion coefficient is calculated at 24ps/nm/km; an input fiber power is calculated at 6.5dBm; and calculating each span to be 75km, 1500km is equivalent to 20 spans. We set the dispersion fading and the SRS crosstalk thresholds as $\Delta P(\lambda) \leq \Delta P_{th1}$=1.5dB and $XT_{SRS}(\lambda) \leq XT_{th1}$=-16dB respectively. By substituting typical parameters into Equation (2), it can be calculated to obtain that the SRS crosstalk requires a label carrier frequency $f_{PT}(\lambda) \geq$ 8MHz; by substituting typical parameters and $f_{PT}(\lambda)$ = 8MHz into Equation (1), it can be calculated to obtain that $\Delta\lambda_{th}$ = 1.536nm, i.e., when the service spectrum width exceeds 1.536nm (about 192 GHz), there is no suitable single label carrier frequency $f_{PT}(\lambda)$ which takes the influences of SRS crosstalk and dispersion fading into account simultaneously: satisfying two conditions $\Delta P(\lambda) \leq \Delta P_{th1}$ and $XT_{SRS}(\lambda) \leq XT_{th1}$, and by substituting the typical parameters and $\Delta\lambda_{eff}$ =1.024nm (about 128 GHz) into Equation (1), it can be calculated to obtain that the label carrier frequency needs to satisfy $f_{PT}(\lambda) \leq$ 12 MHz.

In a transmission scenario of the present embodiment, a service wavelength spectrum width $\Delta\lambda_{eff}$ =1.024nm (about 128 GHz) is lower than a threshold $\Delta\lambda_{th}$=1.536nm; the sending end may select an OOK modulation format; and the selected carrier frequency $f_{PT}(\lambda)$ needs to satisfy two conditions $\Delta P(\lambda) \leq \Delta P_{th1}$ and $XT_{SRS}(\lambda) \leq XT_{th1}$ at the same time. For the SRS crosstalk requirement $f_{PT}(\lambda) \geq$ 8MHz, and the dispersion fading requirement $f_{PT}(\lambda) \leq$ 12MHz, i.e. for all label carrier frequency sets $A_f$ = [8, 12]MHz satisfying the requirements, a carrier frequency set $A_{FFT}$ = [8, 12]]MHz requiring frequency division demultiplexing of a multi-wavelength label at the receiving end, and a frequency set $A_{Dmod}$=[8, 12]MHz requiring demodulation in an OOK format, the channel optical power corresponding to the wavelength label is calculated using the carrier frequency amplitude in the set $A_f$ = [8, 12]MHz where $f_{PT}(\lambda)$=f($\lambda$) is mapped.

In conclusion, the C band carrier frequencies are required to be between [9, 15]MHz, and the L band carrier frequencies are required to be between [8, 12]MHz; as C+L bands are transmitted in the same optical fiber, in order to avoid label carrier frequency conflict of different wavelengths, the label carrier frequencies used by different wavelengths in the C and L bands need to be staggered; in the present embodiment, the total available spectrum resources may be evenly allocated, for example, a carrier frequency between [11.5, 15] MHz is used in the C band, and a carrier frequency between [8, 11.5]MHz is used in the L band.

In an exemplary embodiment, the method is applied to a typical hybrid transmission scenario: 32GBd QPSK, 64GBd QPSK and 128GBd QPSK wavelength services over 1500km of G.652, G.654 and G.655 mixed fiber optic transmission; the reference center wavelength is 1550nm, the 32GBd QPSK is configured with a 50GHz grid, the 64GBd QPSK is configured with a 75GHz grid, and the 128GBd QPSK is configured with a 150GHz grid; in G.652 optical fibers, the dispersion coefficient is calculated at 17ps/nm/km, while in G.655 optical fibers, the dispersion coefficient is calculated at 4ps/nm/km; the 32GBd QPSK is configured with an input fiber power of -1dBm, the 64GBd QPSK is configured with an input fiber power of 1dBm, and the 128GBd QPSK is configured with an input fiber power of 4dBm; and calculating each span to be 75km, 1500km is equivalent to 20 spans. We set the dispersion fading and the SRS crosstalk thresholds as $\Delta P(\lambda) \leq \Delta P_{th1}$=1.5dB and $XT_{SRS}(\lambda) \leq XT_{th1}$=-16dB respectively. Apparently, when transmitting in a G.655 optical fiber, the limitation of SRS crosstalk is larger, and a higher carrier frequency is required; by substituting typical parameters into Equation (2), it can be calculated to obtain that the SRS crosstalk first threshold requires the label carrier frequency $f_{PT}(\lambda) \geq$ 26MHz; the requirements of different wave channel grid configurations for SRS crosstalk are almost unchanged; when transmitting in a G.654 optical fiber, the limitation of dispersion fading is larger, and a lower carrier frequency needs to be used; by substituting a typical parameter and $f_{PT}(\lambda)$ = 26Mhz into Equation (1), it can be calculated to obtain that $\Delta\lambda_{th}$ = 0.568nm; that is, when the service spectrum width exceeds 0.568 nm (about 71 GHz), there is no suitable single label carrier frequency $f_{PT}(\lambda)$ which takes the influences of SRS crosstalk and dispersion fading into account simultaneously: satisfying two conditions $\Delta P(\lambda) \leq \Delta P_{th1}$ and $XT_{SRS}(\lambda) \leq XT_{th1}$, and by substituting the typical parameters $\Delta\lambda_{eff}$ = 0.256 nm, 0.512 nm and 1.024nm (about 32 Ghz, 64 Ghz and 128GHz) into Equation (1), it can be calculated to obtain that the dispersion fading first threshold requires the 32GBd QPSK service wavelength label carrier frequency $f_{PT}(\lambda) \leq$ 60 Mhz, the 64GBd QPSK service wavelength label carrier frequency $f_{PT}(\lambda) \leq$ 30MHz, and the 128GBd QPSK service wavelength label carrier frequency $f_{PT}(\lambda) \leq$ 15MHz.

In a transmission scenario of the present embodiment, the 32GBd QPSK and 64GBd QPSK service wavelength spectrum widths $\Delta\lambda_{eff}$=0.256nm and 0.512nm (about 32Ghz and 64Ghz) are lower than a threshold $\Delta\lambda_{th}$=0.568nm; the sending end may select an OOK modulation format; and the selected carrier frequency $f_{PT}(\lambda)$ needs to satisfy two conditions $\Delta P(\lambda) \leq \Delta P_{th1}$ and $XT_{SRS}(\lambda) \leq XT_{th1}$ at the same time. The SRS crosstalk requires $f_{PT}(\lambda) \geq$ 26MHz, the dispersion fading requires the label carrier frequency of the 32GBd QPSK wavelength service $f_{PT}(\lambda) \leq$ 60MHz and the label carrier frequency of the 64GBd QPSK wavelength service $f_{PT}(\lambda) \leq$ 30MHz; referring to embodiment 3, in order to reduce calculation complexity of signal processing at the receiving end as much as possible, the same carrier frequency mapping may be used for 32 GBd QPSK and 64 GBd service wavelengths, that is, for the 32GBd and 64GBd QPSK service wavelengths, for all label carrier frequency sets $A_f$ = [26, 30]MHz satisfying the requirements, a carrier frequency set $A_{FFT}$ = [26, 30]MHz requiring frequency division demultiplexing of a multi-wavelength label at the receiving end, and a frequency

set $A_{Dmod}$= [26, 30]MHz requiring demodulation in an OOK format, the channel optical power corresponding to the wavelength label is calculated using the carrier frequency amplitude in the set $A_f$=[26, 30]MHz where $f_{PT}(\lambda)=f(\lambda)$ is mapped. The wavelength spectrum width $\Delta\lambda_{eff}$ = 1.024 nm (about 128 GHz) of a 128GBd QPSK service is greater than a threshold $\Delta\lambda_{TH}$ = 0.568 nm; the 2FSK modulation format can be selected at the sending end; the selected label carrier frequency $f_{PT}(\lambda)$ is divided into two, i.e. a high frequency and a high frequency, which are denoted as $f_{PT}(\lambda)=[f_H(\lambda), f_L(\lambda)]$, wherein the high frequency $f_H(\lambda)\in A_{fH}$ and the low frequencies $f_L(\lambda)\in A_{fL}$, $A_{fH}$ and $A_{fL}$ are all high and low frequency label carrier frequency sets satisfying requirements; the high frequency $f_H(\lambda)$ needs to satisfy two conditions $\Delta P(\lambda)\leq P_{th2}$=10dB and $XT_{SRS}(\lambda)\leq XT_{th1}$=-16dB; the low frequency $f_L(\lambda)$ needs to satisfy two conditions $\Delta P(\lambda)\leq\Delta P_{th1}$=1.5dB and $XT_{SRS}(\lambda)\leq XT_{th2}$=-8dB, where $\Delta P_{th2}$ = 10dB and $XT_{th2}$ =-8dB are respectively a set dispersion fading second threshold and a set SRS crosstalk second threshold; by respectively substituting same into Equations (1) and (2), it can be calculated to obtain that the high frequency $f_H(\lambda)$ satisfies $f_H(\lambda)\geq 26$MHz and $f_H(\lambda)\leq 30$MHz, and the low frequency $f_L(\lambda)$ satisfies $f_L(\lambda)\geq 11$MHz and $f_L(\lambda)\leq 15$MHz, i.e., $A_{fH}$ = [26,30]Mhz and $A_{fL}$ = [11,15]MHz.

In this case, in order to reduce calculation complexity of signal processing of the receiving end to the maximum extent, a high frequency in a carrier frequency of a 128GBd QPSK service wavelength label may be combined with the carrier frequencies of a 32GBd and 64GBd QPSK service wavelength labels, that is, the high-frequency points used in the 2FSK modulation and the carrier frequency points used in the OOK modulation overlap, and for a frequency point set $A_{FFT}=A_f \cup A_{fH} \cup A_{fL}$=[11,15] $\cup$ [26,30]MHz for frequency division demultiplexing and a frequency set $A_{Dmod}=A_f \cup A_{fH}$=[26,30]MHz required to be demodulated in an OOK modulation format, the carrier frequency is selected according to the following scheme to calculate channel optical power: when the spectrum width of the service wavelength is lower than a threshold, ie., $\Delta\lambda_{eff}\leq\Delta\lambda_{th}$=0.568 nm, for example, the 32GBd and 64GBd QPSK service wavelengths in the present embodiment, the channel optical power is calculated using the carrier frequency amplitude in the set $A_f$ =[26, 30]MHz where $f_{PT}(\lambda)=f(\lambda)$ is mapped; when the spectrum width of the service wavelength is higher than the threshold, that is, $\Delta\lambda_{eff}>\Delta\lambda_{th}$, for example, for the 128GBd QPSK service wavelength in the present embodiment, the optical power is calculated using the carrier frequency amplitude in the set $A_{fL}$=[11,15]MHz where $f_L(\lambda)$ is mapped.

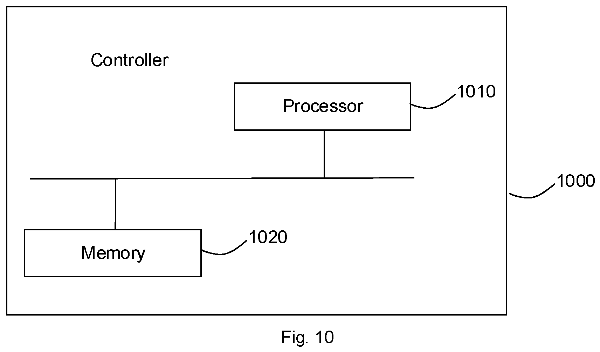

Referring to Fig. 10, an embodiment of the present application further provides a multi-wavelength label signal processing controller 1000, comprising: a memory 1020, a processor 1010, and a computer program which is stored in the memory and can run on the processor; when the processor 1010 executes the computer program, the multi-wavelength label signal processing method in any one of the foregoing embodiments is implemented, for example, the method steps S110 to S140 in Fig. 1, the method steps S210 to S230 in Fig. 2, the method steps S310 to S320 in Fig. 3, the method steps S410 to S420 in Fig. 4, the method steps S510 to S540 in Fig. 5, the method step S610 in Fig. 6, the method steps S710 to S720 in Fig. 7, the method steps S810 to S840 in Fig. 8, and the method steps S910 to S950 in Fig. 9 are performed.

In addition, an embodiment of the present application further provides a computer readable storage medium; the computer readable storage medium stores computer executable instructions, the computer executable instructions are executed by one or more control processors, for example, to execute the method steps S110 to S140 in Fig. 1, the method steps S210 to S230 in Fig. 2, the method steps S310 to S320 in Fig. 3, the method steps S410 to S420 in Fig. 4, the method steps S510 to S540 in Fig. 5, the method step S610 in Fig. 6, the method steps S710 to S720 in Fig. 7, the method steps S810 to S840 in Fig. 8, the method steps S910 to S950 in Fig. 9.

The present application has at least the following beneficial effects: the multi-wavelength label signal processing method proposed in the present application comprises: acquiring a service spectrum width of an optical service; determining a carrier frequency according to the service spectrum width and a preset carrier frequency range; performing modulation processing on wavelength information of the optical service according to the carrier frequency to obtain a single-frequency label signal or a dual-frequency label signal; and sending the single-frequency label signal or the dual-frequency label signal to a signal receiving end, so that the signal receiving end obtains optical power and the wavelength information according to the single-frequency label signal or the dual-frequency label signal, wherein a corresponding label carrier frequency is determined according to a service spectrum width, thereby reducing a non-linear stimulated Raman scattering effect caused when a carrier frequency of a wavelength label signal is relatively low, and the influence of dispersion fading caused when the carrier frequency of the wavelength label signal is relatively high, slowing down the progress of degradation of the quality of the wavelength label signal during long-distance transmission, and solving the carrier frequency selection problem of the multi-wavelength label signal in a large-capacity long-distance transmission scenario.

A person of ordinary skill in the art could understand that the all or some of the operations, systems and apparatuses of the methods disclosed above can be implemented as software, firmware, hardware, and any suitable combination thereof. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to a person of ordinary skill in the art, the term "computer storage medium" includes transitory and non-transitory, removable and non-removable medium implemented in any method or technology for storing information (such as computer-readable instructions, data structures, program modules, or other data). The computer storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, as is well known to a person of ordinary skill in the art, the communication medium typically includes computer-readable instructions, data structures, program modules, or other data in a modulated data signal such as a carrier or other transmission mechanisms, and may include any information delivery medium.

**Claims**

1. A multi-wavelength label signal processing method, performed by a signal sending end of a dense wavelength division multiplexing system, the signal sending end being connected to a signal receiving end, and the method comprising:

   acquiring a service spectrum width of an optical service;
   determining a carrier frequency according to the service spectrum width and a preset carrier frequency range;
   performing modulation processing on wavelength information of the optical service according to the carrier frequency to obtain a single-frequency label signal or a dual-frequency label signal; and
   sending the single-frequency label signal or the dual-frequency label signal to the signal receiving end, so that the signal receiving end obtains optical power and the wavelength information according to the single-frequency label signal or the dual-frequency label signal.

2. The multi-wavelength label signal processing method according to claim 1, wherein the carrier frequency range comprises a first frequency range, a second frequency range and a third frequency range, maximum frequency in the second frequency range is less than minimum frequency in the third frequency range, and a method for determining the carrier frequency range comprises:

   obtaining the first frequency range according to the service spectrum width, a first crosstalk threshold, and a first dispersion threshold;
   obtaining the second frequency range according to the service spectrum width, the first crosstalk threshold, and a second dispersion threshold greater than the first dispersion threshold; and
   obtaining the third frequency range according to the service spectrum width, a second crosstalk threshold greater than the first crosstalk threshold, and the first dispersion threshold.

3. The multi-wavelength label signal processing method according to claim 2, wherein determining a carrier frequency according to the service spectrum width and the carrier frequency range comprises:

   in cases where the service spectrum width is less than or equal to a spectrum width threshold, determining a first carrier frequency according to the first frequency range;
   or,
   in cases where the service spectrum width is greater than the spectrum width threshold, determining a second carrier frequency according to the second frequency range, and determining a third carrier frequency according to the third frequency range.

4. The multi-wavelength label signal processing method according to claim 3, wherein performing modulation processing on wavelength information of the optical service according to the carrier frequency to obtain a single-frequency label signal or a dual-frequency label signal comprises:

   in cases where the service spectrum width is less than or equal to the spectrum width threshold, performing on-off keying modulation processing on the wavelength information of the optical service according to the first carrier frequency, so as to generate the single-frequency label signal;
   or,
   in cases where the service spectrum width is greater than the spectrum width threshold, performing binary frequency shift keying modulation processing on the wavelength information of the optical service according to the second carrier frequency and the third carrier frequency, so as to generate the dual-frequency label signal.

5. The multi-wavelength label signal processing method according to claim 3, wherein a method for generating the spectrum width threshold comprises:

obtaining a minimum carrier frequency according to the wavelength information of the optical service and the first crosstalk threshold; and

generating the spectrum width threshold according to the minimum carrier frequency and the first dispersion threshold.

6. A multi-wavelength label signal processing method, performed by a signal receiving end of a dense wavelength division multiplexing system, the signal receiving end being connected to a signal sending end, and the method comprising:

receiving a wavelength label signal within a preset carrier frequency range;

demodulating the wavelength label signal according to the carrier frequency range, to obtain a service spectrum width and wavelength information;

determining the wavelength label signal as a single-frequency label signal or a dual-frequency label signal according to the service spectrum width; and

obtaining optical power according to the single-frequency label signal or the dual-frequency label signal.

7. The multi-wavelength label signal processing method according to claim 6, wherein the carrier frequency range comprises a first frequency range, a second frequency range and a third frequency range, maximum frequency in the second frequency range is less than minimum frequency in the third frequency range, and demodulating the wavelength label signal according to the preset carrier frequency range to obtain a service spectrum width and wavelength information comprises:

demodulating the wavelength label signal in an on-off keying manner according to the first frequency range and the second frequency range to obtain the service spectrum width and the wavelength information.

8. The multi-wavelength label signal processing method according to claim 6, wherein determining the wavelength label signal as a single-frequency label signal or a dual-frequency label signal according to the service spectrum width comprises:

in cases where the service spectrum width is less than or equal to a spectrum width threshold, determining the wavelength label signal as the single-frequency label signal;

or,

in cases where the service spectrum width is greater than the spectrum width threshold, determining the wavelength label signal as the dual-frequency label signal.

9. The multi-wavelength label signal processing method according to claim 7, wherein obtaining optical power according to the single-frequency label signal or the dual-frequency label signal comprises:

calculating the optical power according to an amplitude of the single-frequency label signal in the first frequency range;

or,

calculating the optical power according to an amplitude of the dual-frequency label signal in the second frequency range.

10. The multi-wavelength label signal processing method according to claim 6, wherein receiving a wavelength label signal within a preset carrier frequency range comprises:

receiving a multi-wavelength label signal; and

performing fast Fourier transform or discrete Fourier transform processing on the multi-wavelength label signal to obtain the wavelength label signal within the carrier frequency range.

11. A controller, comprising a memory, a processor and a computer program stored in the memory and executable on the processor, wherein the processor, when executing the computer program, implements the multi-wavelength label signal processing method according to any one of claims 1 to 10.

12. A computer-readable storage medium, storing computer executable instructions, wherein the computer executable instructions are used for executing the multi-wavelength label signal processing method according to any one of claims 1 to 10.

A service spectrum width of an optical service is acquired

S110

A carrier frequency is determined according to the service spectrum width and a preset carrier frequency range

S120

Modulation processing is performed on wavelength information of the optical service according to the carrier frequency, to obtain a single-frequency label signal or a dual-frequency label signal

S130

The single-frequency label signal or the dual-frequency label signal is sent to the signal receiving end, so that the signal receiving end obtains optical power and the wavelength information according to the single-frequency label signal or the dual-frequency label signal

S140

Fig. 1

The first frequency range is obtained according to the service spectrum width, a first crosstalk threshold and a first dispersion threshold

S210

The second frequency range is obtained according to the service spectrum width, the first crosstalk threshold, and a second dispersion threshold greater than the first dispersion threshold

S220

The third frequency range is obtained according to the service spectrum width, a second crosstalk threshold greater than the first crosstalk threshold, and the first dispersion threshold

S230

Fig. 2

In cases where the service spectrum width is less than or equal to a spectrum width threshold, on-off keying modulation processing is performed on wavelength information of the optical service according to the first carrier frequency, so as to generate the single-frequency label signal ⟋S310

Or, In cases where the service spectrum width is greater than the spectrum width threshold, binary frequency shift keying modulation processing is performed on the wavelength information of the optical service according to the second carrier frequency and the third carrier frequency, so as to generate the dual-frequency label signal ⟋S320

Fig. 3

A minimum carrier frequency is obtained according to the wavelength information of the optical service and the first crosstalk threshold ⟋S410

The spectrum width threshold is generated according to the minimum carrier frequency and the first dispersion threshold ⟋S420

Fig. 4

A wavelength label signal is received within a preset carrier frequency range

S510

The wavelength label signal is demodulated according to the preset carrier frequency range, to obtain a service spectrum width and wavelength information

S520

The wavelength label signal is determined as a single-frequency label signal or a dual-frequency label signal according to the service spectrum width

S530

Optical power is obtained according to the single-frequency label signal or the dual-frequency label signal

S540

Fig. 5

The wavelength label signal is demodulated in an on-off keying manner according to the first frequency range and the second frequency range, to obtain the service spectrum width and the wavelength information

S610

Fig. 6

The optical power is calculated according to an amplitude of the single-frequency label signal in the first frequency range

S710

Or, The optical power is calculated according to an amplitude of the dual-frequency label signal in the second frequency range

S720

Fig. 7

A dispersion fading first threshold, a dispersion fading second threshold, an SRS crosstalk first threshold, and an crosstalk second threshold are determined; and an appropriate spectrum width threshold $\Delta\lambda_{th}$ is calculated according to a given DWDM transmission scenario — S810

S820

Is the effective spectrum width of the service wavelength $\Delta\lambda_{eff}>\Delta\lambda_{th}$

No

Yes — S830

Wavelength label information is modulated in a 2FSK format, wherein the used high-frequency carrier frequency needs to satisfy a dispersion fading second threshold condition and an SRS crosstalk first threshold condition at the same time, and the used low-frequency carrier frequency needs to satisfy a dispersion fading first threshold condition and an SRS crosstalk second threshold condition at the same time, and a carrier frequency mapping is denoted as
$$f_{PT}(\lambda)=[f_H(\lambda)\in A_{fH}, f_L(\lambda)\in A_{fL}]$$

S840

Wavelength label information is modulated in an OOK format, wherein the used carrier frequency needs to satisfy the dispersion fading first threshold condition and the SRS crosstalk first threshold condition, and the carrier frequency mapping is denoted as
$$f_{PT}(\lambda)=f(\lambda)\in A_f$$

Fig. 8

According to a given DWDM transmission scenario and a wavelength label carrier frequency configuration of the sending end, all frequency sets $A_{FFT} \supseteq A_f \cup A_{fH} \cup A_{fL}$ that may appear at the receiving end are determined, and frequency division demultiplexing is performed using FFT or DFT ⟿ S910

For the demultiplexed label carrier frequency, a union set $A_{Demod} = A_f \cup A_{fH}$ of a frequency set $A_f$ used by the OOK modulation and a high frequency set $A_{fH}$ used by the 2FSK modulation at the sending end are used to perform demodulation according to an OOK modulation format, and obtain the effective spectral width information $\Delta\lambda_{eff}$ carried in each wavelength label ⟿ S920

Is the effective spectrum width of the service wavelength $\Delta\lambda_{eff} > \Delta\lambda_{th}$ ⟋ S930

No

Yes ⟋ S940

⟋ S950

The channel optical power of the current service wavelength is calculated using the frequency points in the set $A_{fL}$ where the low-frequency frequency mapping relationship $f_L(\lambda)$ used in the 2FSK modulation is mapped

The channel optical power of the current service wavelength is calculated using the frequency points in the set $A_f$ where the frequency mapping relationship $f_L(\lambda)$ used in the OOK modulation is mapped

Fig. 9

Controller

Processor 1010

1000

Memory 1020

Fig. 10

## INTERNATIONAL SEARCH REPORT

| International application No. |
| --- |
| **PCT/CN2023/093889** |

**A. CLASSIFICATION OF SUBJECT MATTER**

H04J 14/02(2006.01)i

According to International Patent Classification (IPC) or to both national classification and IPC

**B. FIELDS SEARCHED**

Minimum documentation searched (classification system followed by classification symbols)

IPC: H04J,H04L

Documentation searched other than minimum documentation to the extent that such documents are included in the fields searched

Electronic data base consulted during the international search (name of data base and, where practicable, search terms used)

CNTXT, DWPI, VEN: 光通信, 标签, 波长标签, 串扰, 劣化, 衰落, 拉曼, 色散, 信号, 业务, 谱宽, 宽度, 频率, 载波, optical, label, tag, SRS, raman, dispersion, wavelength, service, width, frequency, carrier

**C. DOCUMENTS CONSIDERED TO BE RELEVANT**

| Category* | Citation of document, with indication, where appropriate, of the relevant passages | Relevant to claim No. |
| --- | --- | --- |
| A | CN 104104489 A (ZTE CORP.) 15 October 2014 (2014-10-15) description, paragraphs 29-100 | 1-12 |
| A | CN 112636866 A (WUHAN RESEARCH INSTITUTE OF POSTS & TELECOMMUNICATIONS CO., LTD.) 09 April 2021 (2021-04-09) entire document | 1-12 |
| A | CN 102195739 A (ZTE CORP.) 21 September 2011 (2011-09-21) entire document | 1-12 |
| A | EP 1653766 A2 (SAMSUNG ELECTRO-MECHANICS CO., LTD. et al.) 03 May 2006 (2006-05-03) entire document | 1-12 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **27 July 2023** | **02 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 104104489 | A | 15 October 2014 | JP | 2016522599 | A | 28 July 2016 |
| | | | | EP | 2985943 | A1 | 17 February 2016 |
| | | | | KR | 20150140721 | A | 16 December 2015 |
| | | | | WO | 2014166205 | A1 | 16 October 2014 |
| CN | 112636866 | A | 09 April 2021 | None | | | |
| CN | 102195739 | A | 21 September 2011 | EP | 2717484 | A1 | 09 April 2014 |
| | | | | WO | 2012159417 | A1 | 29 November 2012 |
| | | | | KR | 20140022429 | A | 24 February 2014 |
| | | | | JP | 2014516223 | A | 07 July 2014 |
| EP | 1653766 | A2 | 03 May 2006 | US | 2006093358 | A1 | 04 May 2006 |
| | | | | KR | 20060039245 | A | 08 May 2006 |
| | | | | JP | 2006135983 | A | 25 May 2006 |

Form PCT/ISA/210 (patent family annex) (July 2022)

**REFERENCES CITED IN THE DESCRIPTION**

**Patent documents cited in the description**

- CN 202210809267X